# EUROPEAN PATENT SPECIFICATION

(11) **EP 0 793 526 B1**
(45) Date of publication and mention of the grant of the patent: **30.10.2002**
(21) Application number: 95923647.2
(22) Date of filing: 21.06.1995
(51) Int. Cl.: B01D 53/12, B01D 53/72, B01D 53/83

(54) **METHOD AND APPARATUS FOR PURIFICATION OF VENTILATING AIR**
METHODE UND VORRICHTUNG ZUR REINIGUNG VON LÜFTUNGSLUFT
PROCEDE ET DISPOSITIF DE PURIFICATION D'AIR DE VENTILATION

(30) Priority: 21.06.1994 SE 9402183
(43) Date of publication of application: 10.09.1997
(73) Proprietor: American Purification, Inc., Newport Beach,CA 92680 (US)
(72) Inventor: NOREEN, Lars, S-691 48 Karlskoga (SE)
(74) Representative: Axelsson, Rolf
(86) International application number: SE9500765
(87) International publication number: WO95035149

(56) References cited:
- EP-A- 0 583 594
- WO-A-92/15395
- DE-C- 2 720 120
- SE-B- 461 893

## Description

The present invention relates to a method of cleaning ventilation air that is contaminated with at least two organic substances, such as solvents, wherein the ventilation air is caused to pass through fluidized beds that contain material which is capable of adsorbing said organic substances and thereafter capable of releasing the substances through a desorption process. The invention also relates to an arrangement for use when carrying out the method.

Present-day air cleansing processes use, to some extent, fluidized beds that contain an adsorption material which is capable of adsorbing the contaminant, e.g. an organic solvent, present in a flow of air that passes through the fluidized bed. Activated carbon is the adsorbent that is normally used in these known processes.

Swedish Patent Specification 8100537-3 describes another type of adsorbent in the form of a macroporous, particulate polymeric material retailed under the trademark BONOPORE®. This adsorbent is described comprehensively in the aforesaid Swedish patent specification and will not therefore be described in detail here.

Our European Patent Specification EP-B1-0 312 516 describes an air-cleaning process in which the aforesaid macroporous polymer is used as an adsorbent. The process described is highly advantageous, since it proceeds continuously and enables solvent separated from an air flow to be recovered. This is achieved by tapping the absorbent continuously from the fluidized beds and delivering the adsorbent to a desorber where the adsorbent is regenerated and then returned to the beds, and so forth. The desorber has the form of a stripper in which the adsorbent is regenerated by means of hot air which is fed through the stripper in counterflow with the adsorbent and from which the solvents are thereafter condensed and recovered and the regenerated adsorbent is returned to the fluidized beds in the adsorption section.

One common drawback with all known adsorbents used in air-cleaning processes is that they are not applicable or suitable for adsorbing all the different types of solvent that occur. Consequently, when cleaning air in accordance with known adsorption techniques, problems often arise because the mixtures of organic substances to be extracted from an air flow by adsorption will normally contain one or more components for which the adsorbent used is unsuitable.

The organic substance concerned may be one which cannot be adsorbed by the adsorbent used or can be adsorbed to only a small extent. The reverse may also apply, to wit the substance cannot be desorbed from the adsorbent because the attraction forces between adsorbent and substance are much too strong, or because the desorption process would require a temperature which is harmful to the adsorbent or which may induce spontaneous combustion.

The former case will result in poor purification efficiency, while in the latter case the adsorbent will gradually become contaminated with solvent residues to an extent which impairs the original adsorption capacity of the adsorbent and finally render the adsorbent useless.

According to a first aspect of the present invention, there is provided an air-cleaning process which eliminates or greatly reduces the aforesaid problems that are encountered when cleaning air that contains a mixture of several organic substances.

The inventive solution is based on the realization that these problems can be overcome by using a combination of different adsorbents, each being suitable for use in relation to particular solvents, these adsorbents being included in separate fluidized beds and each being regenerated separately during the course of the process.

The special characteristic features of a method of the kind defined in the first paragraph reside in causing the ventilation air to first pass through at least one first fluidized bed that contains a first adsorbent material particularly suited for adsorption of the high boling point organic substances, and thereafter passing said ventilation air through at least one second fluidized bed that contains a second adsorbent material having different adsorption characteristics as compared to the first adsorption material and being particularly suited for adsorption of the low boiling point organic substances; and by tapping-off the first and second adsorbents separately from the first and the second beds for regeneration of the adsorbents by desorption of the organic substances; and thereafter returning the adsorbents to their respective beds.

By using in this way fluidized beds that are arranged in series and by appropriate selection of adsorbent in the first bed, it is possible to adsorb in the first bed substances that cannot be adsorbed by the adsorbent in the second bed or which will destroy the adsorbent when adsorbed thereby, while selecting for the second bed an adsorbent which is appropriate for the adsorption of substances that cannot be adsorbed in the first bed.

When purifying ventilation air that contains both high boiling and low boiling solvents, it is preferred that the ventilation air is first passed through at least one first bed that contains an adsorbent in the form of a particulate, macroporous polymer selected to adsorb high boiling solvents effectively, and that the air is then passed through at least one second bed which contains an adsorbent in the form of activated carbon for adsorption of low boiling solvent remaining in the air.

In this case, the high boiling solvents that are adsorbed effectively by the process and that can be easily desorbed from the particulate, macroporous polymer, will not be delivered to the bed containing activated carbon, since carbon is unsuitable for this type of solvent. The particulate, macroporous polymer in the first fluidized bed has a poorer adsorbency for low boiling solvents, and the low boiling solvents thus passing through the first bed will be adsorbed effectively by the activated carbon in the second bed and can also be readily desorbed from the carbon.

Thus, the good properties of the adsorbents are utilized without the deficiencies of the adsorbents having a negative effect on the air-cleaning process.

In a first embodiment, which is particularly suitable for use when extracted solvents which are not to be reused, each of the two adsorbents used are passed for regeneration to a respective desorber or to respective parts of a common desorber, in which each is introduced into at least one fluidized bed through which hot air is blown to regenerate the adsorbent in question, whereafter the regenerated adsorbents are returned to respective beds in the adsorption unit and the solvent-containing air is passed to a combustion unit.

In this regard, it is preferred that the volume of air used to regenerate the adsorbents is chosen so that the concentration of solvent in the air that has passed through the fluidized bed or beds in the desorber will be sufficiently high for combustion of the mixture to be self-sustaining.

In another embodiment, each of the two adsorbents is regenerated in a respective desorber, each of which has the form of a stripper or the form of a separate channel in one and the same stripper, in which respective adsorbents are regenerated by means of hot air which is caused to flow through the adsorbents in counterflow and from which the solvent vapours are thereafter condensed and recovered, the regenerated adsorbents being returned to respective beds in the adsorption unit.

As mentioned above the solvents can be rendered harmless by means of combustion, which is also cost-saving, provided that the concentration of solvent in the air flow is sufficiently high to achieve a self-sustaining combustion process.

Other characteristic features of the inventive method and the characteristic features of an arrangement for use when carrying out the method are set forth in the following Claims.

The invention will now be described in more detail with reference to an exemplifying embodiment thereof and also with reference to the accompanying drawing.

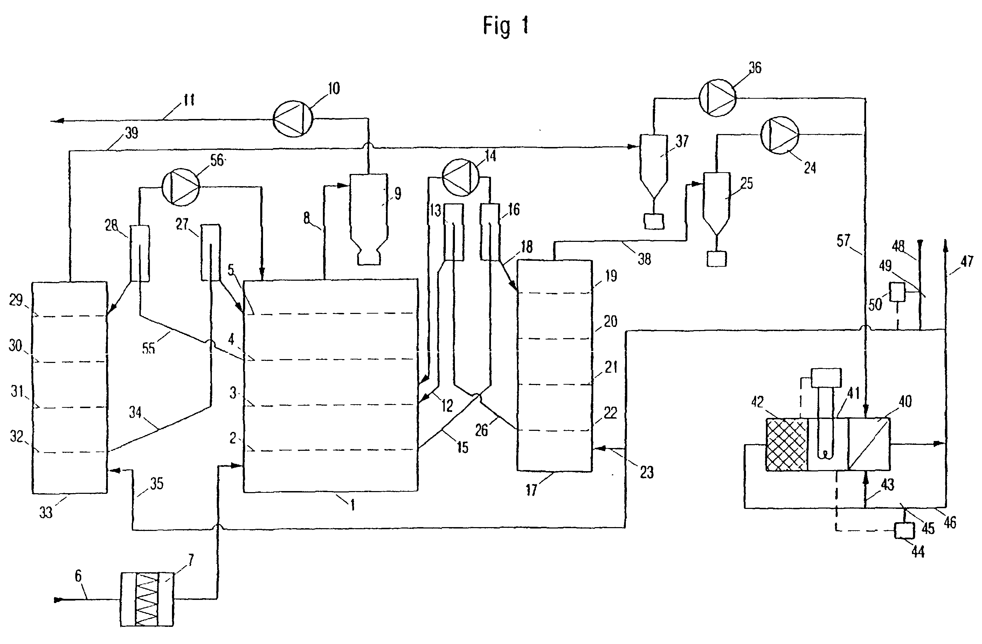

Fig. 1 illustrates an embodiment of an air-cleaning plant in accordance with the invention.

Shown in Fig. 1 is an adsorber 1 which in the illustrated case includes four fluidized beds 2-5 arranged sequentially in series in a common tower. Industrial ventilation air contaminated with organic solvents is delivered to the adsorber 1 positioned beneath the lowermost fluidized bed 2, through a conduit 6 and a filter 7. The ventilation air passes up through the fluidized beds to an outlet conduit 8 which is connected to the main fan 10 of the plant via a cyclone 9, and the cleaned process air is discharged through a conduit 11.

The incoming volume of contaminated air will normally be very large and have a low contaminant content, for instance a content of 0.1-0.5 g/m³, which places high demands on the throughflow capacity of the adsorber 1.

It is assumed in this embodiment that the process air contains one or more high-boiling point solvents and one or more low-boiling point solvents. As mentioned in the aforegoing, the adsorbent used for dealing with the high-boiling point solvents may conveniently consist in a particulate macroporous polymer of the kind retailed under the trademark BONOPORE®, since this polymer is highly adsorptive with regard to high-boiling point solvents and can be readily regenerated by their desorption. The polymer is also well-suited for use in a continuous process in which fluidized beds are used, because the spherical particles are highly resistance to wear and allow the solvents to be quickly desorbed.

Because the polymer is not as effective in the adsorption of low-boiling point solvents, these latter solvents are adsorbed on activated carbon, which is a relatively inexpensive adsorbent that has good adsorbency with regard to low-boiling point solvents. The low-boiling point solvents can be readily desorbed from the carbon. However, the active carbon should be protected against high-boiling point solvents, since such solvents cannot be readily desorbed for regenerating the activated carbon and will therefore gradually impair the adsorption capacity of the carbon.

Accordingly, in the case of the illustrated embodiment of the invention the adsorbent used in the two lowermost fluidized beds 2 and 3 of the adsorber 1 consists in the aforesaid macroporous polymer material or some equivalent material, so that as the process air passes through the adsorber, the high-boiling point solvents will be adsorbed first by this material. The process air then passes through the two remaining, uppermost fluid beds 4 and 5 in the adsorber 1 in which activated carbon is used as an adsorbent for effective adsorbtion of the remaining, low-boiling point solvents.

The number of beds which include the first-mentioned or last-mentioned adsorbent will correspond to the requirements that prevail at that time. When two beds are used for each adsorbent, new or regenerated adsorbent is introduced into the uppermost bed of each pair and is allowed to wander through the bed in a known manner, so as to fall from the bottom edge surface of said bed down into the underlying bed, and wander therethrough, whereafter the adsorbent is tapped-off and regenerated.

In the illustrated embodiment, the polymer material is delivered to the bed 3 through a conduit 12 from a replenishing vessel 13, and first wanders through the bed 3 and then through the bed 2, whereafter the adsorbent material is taken-out through a conduit 15 and delivered to an emptying vessel 16, with the aid of a transportation fan or blower 14. The adsorbent material is transferred from the vessel 16 to a desorber 17 through a conduit 18.

In the illustrated case, the desorber has the form of a tower which contains four fluidized beds 19-22 through which the adsorbent passes from the uppermost bed to the lowermost bed while being regenerated with the aid of hot air which is delivered through a conduit 23 and drawn up through the beds with the aid of a suction fan 24 connected to the desorber via a cyclone 25.

Desorption thus takes place successively as the adsorbent passes between the different beds and the adsorbent is essentially fully regenerated when leaving the lowermost bed 22 through which the cleanest air is blown, and passed to the aforesaid replenishing vessel 13 through a conduit 26.

The adsorbent thus passes around a continuous circuit between the beds 3 and 2 in the adsorber 1 and the regenerating beds 19-22 in the desorber 17.

The activated carbon in the fluidized beds 5 and 4 of the adsorber 1 is utilized in a similar manner. The activated carbon is delivered to the adsorber 1 through a replenishing vessel 27 and is taken-out to an emptying vessel 28 through a conduit 55 with the aid of a transportation fan or blower 56. The activated carbon is then transferred from the emptying vessel 28 to a desorber 33 which contains four fluidized desorption beds 29-32 and the thus regenerated carbon is then fed back to the replenishing vessel 27 through a conduit 34. Hot air entering through a conduit 35 is drawn-up through the different beds in the desorber 33 with the aid of a suction fan 36 connected to the desorber via a cyclone 37.

The activated carbon thus also moves in a continuous circuit, between the pertinent adsorption beds 5 and 4 in the adsorber 1 and the desorption beds 29-32 in the desorber 33.

The solvents are desorbed reliably and effectively in the desorber 17, since high-boiling point solvents are readily desorbed from the polymer material. The activated carbon is also regenerated effectively in the desorber 33, since the activated carbon in the adsorber 1 is protected against contact with the high-boiling point solvents that have been adsorbed on the polymer adsorbent prior to the process air reaching the beds 4, 5 containing activated carbon.

The volume of hot air delivered to respective desorbers 17, 33 for regenerating the adsorbents is much smaller than the volume of process air that passes through the adsorber 1. Thus, there will leave through the outlet conduits 38 and 39 of respective desorbers an air/solvent mixture whose solvent concentration is sufficiently high to enable the mixture to be burned immediately. This is an advantage from an economic aspect among other aspects, particularly when the air flow contains a mixture of solvents whose separate extraction would be too expensive in relation to the price that could be charged for the extracted solvents. It is therefore beneficial to burn the air and solvent mixture and, optionally, recover the thermal energy generated by the combustion process. This applies in particular when the combustion process is able to take place without needing to supply additional energy. This can be achieved by adapting the volume of regenerating air delivered to respective desorber through the conduits 23 and 35 so that after passing through the desorber, the solvent concentration in the air will be sufficiently high for the combustion process to be self-sustaining. In this regard, there is normally required a solvent concentration above 3 g/m³, a concentration which can be easily obtained with the aid of the present invention. The described plant can thus be considered to act as a concentrator in which the large volume of process air delivered to the plant and having a low solvent concentration is worked-up to a much smaller volume of greater concentration. The solvent concentrate will normally be worked-up to at least ten times its original concentration.

The Figure shows how the air flow of high solvent concentration is passed from the fan 36 through a conduit 57 to a combustion unit which includes a heat exchanger 40, a preheater 41 and a catalyst 42. The hot combustion gases from the catalyst 42 are delivered to the heat exchanger 40 through a conduit 43. In the illustrated case, the temperature of the air flow delivered from the heat exchanger 40 to the catalyst 42 is regulated by means of a regulator 44 and a valve 45 incorporated in a shunt-line 46. When the combustion process is self-sustaining, the preheater 41 need only be driven during the starting-up stage.

The combustion gases produced by complete combustion are discharged through a conduit 47. Reference numeral 48 identifies a conduit for the intake of fresh air, which is regulated with the aid of a valve 49 controlled by a temperature-actuated regulator means 50. The temperature of the regenerating air delivered to respective desorbers can be adjusted to a desired value with the aid of this air intake.

Each of the desorbers 17 and 33 that work with fluidized beds can be replaced with a respective stripper unit of the kind described in our aforementioned European Patent EP-B1-0 312 516. In this case, the adsorbent material leaving the two groups of fluidized beds in the adsorber 1 is delivered to a respective stripper tower or to a respective shaft in a common stripper tower, through which the adsorbent material falls while coacting with a regenerating air flow that passes up through the tower in the opposite direction. The polymer material is heated so that the adsorbed solvents are desorbed, wherewith the resultant solvent vapours are drawn by suction to a condensater means in which the vapour is cooled and condenses and the solvents optionally recovered.

Solvents of different boiling points can be extracted separately from the adsorbent by heating the adsorbent stepwise to different temperatures during its passage through the tower, and the extracted solvent vapours can be condensed for reuse of the solvents, if so desired.

Alternatively, the air flow used to regenerate the adsorbent and containing adsorbent vapour can also be delivered to a combustion unit in the manner described with reference to Fig. 1. The air flow will contain a sufficiently high solvent concentration to self-sustain the combustion process also in this case.

The invention has been described in the aforegoing with reference to an exemplifying embodiment illustrated in the accompanying drawing. It will be understood, however, that this embodiment can be modified in several respects within the scope of the following Claims. For instance, the number of fluidized beds in both the adsorber and the desorber can be varied in accordance with requirements. The adsorber can also operate with more than two adsorbents, so as to cleanse the air flow over a still larger contaminant spectrum. In addition to catalytic combustion, which can be effected at relatively low temperatures, thermal combustion can also be employed if so desired.

## Claims

1. A method of purifying ventilation air that is contaminated with both high boiling point and low boiling point organic substances, such as solvents, wherein the ventilation air is caused to pass through fluidized beds that contain material capable of adsorbing said organic substances and thereafter capable of releasing the organic substances by desorption, **characterized by** causing the ventilation air to first pass through at least one first fluidized bed that contains a first adsorbent material particularly suited for adsorption of the high holing point organic substances, and thereafter passing said ventilation air through at least one second fluidized bed tnat contains a second adsorbent material having different adsorption characteristics as compared to the first adsorption material and being particularly suited for adsorption of the low boiling point organic substances; and by tapping-off the first and second adsorbents separately from the first and the second beds for regeneration of the adsorbents by desorption of the organic substances; and thereafter returning the adsorbents to their respective beds.

2. A method according to Claim 1 for cleaning ventilation air that contains both high-boiling point and low-coiling point solvents, **characterized by** passing the air first through at least one first bed that contains an adsorbent in the form of a particulate, macroporous polymer selected to adsorb effectively high-boiling point solvents, and thereafter passing the air through at least one second bed that contains an adsorbent in the form of activated carbon for adsorption of low-boiling point solvent remaining in the ventilation air.

3. A method according to Claim 1 or 2, **characterized by** feeding each of the two adsorbents separately to a respective desorber or to different parts of a common desorber for regenerating of said adsorbents, wherein each of the adsorbents is introduced into at least one fluidized bed through which hot air is blown to regenerate the adsorbent in question; returning the regenerated adsorbents to their respective beds in the adsorption unit; and feeding the solvent-containing air to a combustion unit.

4. A method according to Claim 3, **characterized by** delivering the adsorbent regenerating air in a volume such that after passing through the fluidized bed or beds in the desorber, the solvent concentration of the air will be sufficiently high for the combustion of said solvent-air mixture to be self-sustaining.

5. A method according to Claim 1 or 2, **characterized by** feeding each of the two adsorbents to be regenerated separately to a respective descrber, wherein each desorber has the form of a stripper or a separate channel in one and the same stripper, in which respective adsorbents are regenerated by hot air which is caused to flow through said respective adsorbents in counterflow and from which the solvents are thereafter condensed and recovered; and by returning the regenerated adsorbents to their respective beds in the adsorption unit.

6. An arrangement for use when cleaning ventilation air that is contaminated with both high boiling point and low boiling point organic substances, such as solvents, in which arrangement the ventilation air is caused to pass through fluidized beds (2-5) that contain material capable of adsorbing said organic substances and thereafter capable of releasing the substances by desorption, **characterized in that** the arrangement includes at least one first fluidized bed (2, 3 that contains a first adsorbent material particularly suited for the adsorption of the high boiling point organic substances, at least one second fluidized bed (4, 5) that contains a second adsorbent material having different adsorption characteristics as compared to the first adsorption material and being particularly suited for adsorption of the low boiling point organic substances; means (10) for causing the contaminated ventilation air to pass first through the first bed and then through the second; means (15, 16, 14, 18; 55, 28, 56) for tapping-off the first and second adsorbents separately from the respective first (2, 3) and second (4, 5) beds and regenerating said adsorbents by desorption of the organic substances; and means (26, 13, 12; 34, 27) for returning the regenerated adsorbents to their respective beds.

7. An arrangement according to Claim 6 for cleaning ventilation air that contains both high-boiling point and low-boiling point solvents, **characterized in that** the first bed (2, 3) contains an adsorbent in the form of a particulate, macroporous polymer which is chosen to adsorb effectively high-boiling point solvent; and **in that** the second bed (4, 5) contains an adsorbent in the form of activated carbon for adsorption of low-boiling point solvent present in said air.

8. An arrangement according to Claim 6 or Claim 7, **characterized in that** the arrangement includes a desorber (17; 33) for each adsorbent or different parts of a conmon desorber for each adsorbent; means (15, 16, 14, 18; 55 28, 56) for introducing the adsorbent into at least one fluidized bed (19, 29) in an associated desorber (17; 33;) means (24; 36) for causing hot air to pass through the bed so as to regenerate the adsorbent; means (26, 12, 13; 34, 27) for returning the regenerated adsorbent to its respective bed in the adsorption unit (1); and means (24, 36, 57) for delivering the solvent-containing air to a combustion unit (40-42).

## Patentansprüche

1. Verfahren zum Reinigen von Ventilationsluft, die sowohl mit organischen Substanzen mit hohem Siedepunkt als auch mit niedrigem Siedepunkt, wie beispielsweise Lösungsmittel, verunreinigt ist, wobei bewirkt wird, dass die Ventilationsluft durch fluidisierte Betten hindurchgeführt wird, die ein Material enthalten, das in der Lage ist, die organischen Substanzen zu adsorbieren, und danach in der Lage ist, die organischen Substanzen durch Desorption freizugeben, **dadurch gekennzeichnet, dass** bewirkt wird, dass die Ventilationsluft zuerst durch zumindest ein erstes Fließbett hindurchgerührt wird, welches ein erstes adsorbierendes Material enthält, welches insbesondere zur Adsorption der organischen Substanzen mit hohem Siedepunkt geeignet ist, und danach, dass die Ventilationsluft durch zumindest ein zweites Fließbett hindurchgeführt wird, welches ein zweites adsorbierendes Material enthält, welches andere Adsorptionseigenschaften verglichen mit dem ersten Adsorptionsmaterial aufweist, und insbesondere zur Adsorption der organischen Substanzen mit niedrigem Siedepunkt geeignet ist; und durch getrenntes Abzapfen der ersten und zweiten Adsorber von den ersten und den zweiten Betten zur Regeneration der Adsorber durch Desorption der organischen Substanzen; und danach Zurückführen der Adsorber in ihre jeweiligen Betten.

2. Verfahren gemäß Anspruch 1 zum Reinigen von Ventilationsluft, die sowohl Lösungsmittel mit hohem Siedepunkt als auch mit niedrigem Siedepunkt enthält, **dadurch gekennzeichnet, dass** Luft zuerst durch zumindest ein erstes Bett hindurchgeführt wird, das einen Adsorber in der Form eines aus Partikeln bestehenden makroporösen Polymers enthält, welcher ausgewählt ist, um effektiv Lösungsmittel mit hohem Siedepunkt zu adsorbieren, und danach Durchführen der Luft durch zumindest ein zweites Bett, das Adsorber in der Form von Aktivkohle enthält zur Adsorption von Lösungsmittel mit niedrigem Siedepunkt, welches in der Ventilationsluft verbleibt.

3. Verfahren gemäß Anspruch 1 oder 2, **gekennzeichnet durch** getrenntes Zuführen eines jeden der zwei Adsorber zu einem jeweiligen Desorber oder zu verschiedenen Teilen eines gemeinsamen Desorbers zum Regenerieren der Adsorber, wobei jeder der Adsorber in zumindest ein Fließbett eingeführt wird, **durch** welches heiße Luft geblasen wird, um den fraglichen Adsorber zu regenerieren; Zurückführen der regenerierten Adsorber zu ihren jeweiligen Betten in der Adsorptionseinheit; und Zuführen der Lösungsmittel enthaltenden Luft zu einer Verbrennungseinheit.

4. Verfahren gemäß Anspruch 3, **gekennzeichnet durch** Zuführen der Adsorber regenerierenden Luft in einem derartigem Volumen, dass nach einem Hindurchführen **durch** das Fließbett oder die Betten in den Desorber, die Lösungsmittelkonzentration der Luft ausreichend hoch für die Verbrennung der Lösungsmittel-Luft-Mischung ist, um selbsttragend zu sein.

5. Verfahren gemäß Anspruch 1 oder 2, **gekennzeichnet durch** ein Zuführen eines jeden der zwei Adsorber, die getrennt zu regenerieren sind, zu jeweiligen Desorbern, wobei jeder Desorber die Form eines Abstreifers oder eines separaten Kanals in einem oder dem gleichen Abstreifer aufweist, in welchem jeweilige Adsorber regeneriert werden **durch** heiße Luft, welche veranlasst wird, **durch** die jeweiligen Adsorber im Gegenstrom zu fließen, und von welchem die Lösungsmittel danach kondensiert und wiedergewonnen werden; und **durch** Zurückführen der regenerierten Adsorber zu ihren Betten in der Adsorptionseinheit.

6. Anordnung zur Verwendung beim Reinigen von Ventilationsluft, die mit sowohl organischen Substanzen mit hohem Siedepunkt als auch mit niedrigem Siedepunkt, wie beispielsweise Lösungsmittel, verunreinigt ist, wobei bei der Anordnung bewirkt wird, dass die Ventilationsluft durch Fließbetten (2 - 5) hindurchgeführt wird, welche Material enthalten, das in der Lage ist, die organischen Substanzen zu adsorbieren, und danach in der Lage ist, die Substanzen durch Desorption freizugeben, **dadurch gekennzeichnet, dass** die Anordnung zumindest ein erstes Fließbett (2, 3) enthält, welches ein erstes Adsorbermaterial enthält, welches insbesondere für die Adsorption der organischen Substanzen mit hohem Siedepunkt geeignet ist, zumindest einen zweites Fließbett (4, 5), das ein zweites Adsorbermaterial enthält, welches andere Adsorptionseigenschaften verglichen mit dem ersten Adsorbermaterial aufweist, und insbesondere für eine Adsorption der organischen Substanzen mit niedrigem Siedepunkt geeignet ist; eine Einrichtung (10) zum Bewirken, dass die verunreinigte Ventilationsluft zuerst durch das erste Bett hindurchgeführt wird und dann durch das zweite; Einrichtungen (15, 16, 14, 18; 55, 28, 56) zum getrennten Abzapfen der ersten und zweiten Adsorber von den jeweiligen ersten (2, 3) und zweiten (4, 5) Betten, und Regenerieren der Adsorber durch Desorption der organischen Substanzen; und Einrichtungen (26, 13, 12; 34, 27) zum Zurückführen der regenerierten Adsorber zu ihren jeweiligen Betten.

7. Anordnung gemäß Anspruch 6 zum Reinigen von Ventilationsluft, die sowohl Lösungsmittel mit hohem Siedepunkt als auch mit niedrigem Siedepunkt enthält, **dadurch gekennzeichnet, dass** das erste Bett (2, 3) einen Adsorber in Form eines aus Partikeln bestehenden makroporösen Polymers enthält, welcher ausgewählt ist, um effizient Lösungsmittel mit hohem Siedepunkt zu adsorbieren; und dadurch dass, das zweite Bett (4, 5) einen Adsorber in der Form von Aktivkohle zur Adsorption des Lösungsmittels mit niedrigem Siedepunkt enthält, welches in der Luft vorhanden ist.

8. Anordnung gemäß Anspruch 6 oder 7, **dadurch gekennzeichnet, dass** die Anordnung einen Desorber (17; 33) für jeden Adsorber oder verschiedene Teile eines gemeinsamen Desorbers für jeden Adsorber enthält; Einrichtungen (15, 16, 14, 18; 55, 28, 56) zum Einführen des Adsobers in zumindest ein Fließbett (19, 29) in einem assoziierten Desorber (17; 33); Einrichtungen (24; 36) zum Bewirken, dass die heiße Luft durch das Bett hindurchgeführt wird, um so den Adsorber zu regenerieren; Einrichtungen (26, 12, 13; 34, 27) zum Zurückführen des regenerierten Adsorbers zu seinem jeweiligen Bett in der Adsorptionseinheit (1); und Einrichtungen (24, 36, 57) zum Zuführen der Lösungsmittel enthaltenden Luft zu einer Verbrennungseinheit (40-42).

## Revendications

1. Procédé de purification d'air de ventilation qui est contaminé à la fois par des substances organiques à haut point d'ébullition et des substances organiques à bas point d'ébullition, telles que des solvants, dans lequel on fait passer l'air de ventilation au travers de lits fluidisés qui contiennent un matériau en mesure d'adsorber lesdites substances organiques, puis en mesure de libérer les substances organiques par désorption, **caractérisé en ce qu'**on fait tout d'abord passer l'air de ventilation au travers d'au moins un premier lit fluidisé qui contient un premier matériau adsorbant, particulièrement approprié pour adsorber les substances organiques à haut point d'ébullition, puis on fait passer ledit air de ventilation au travers d'au moins un second lit fluidisé qui contient un second matériau adsorbant présentant des caractéristiques d'adsorption différentes de celles du premier matériau adsorbant et étant particulièrement approprié pour adsorber les substances organiques à bas point d'ébullition ; et on prélève les premier et second adsorbants séparément des premier et second lits pour régénérer les adsorbants par désorption des substances organiques ; puis on renvoie les adsorbants dans leurs lits respectifs.

2. Procédé selon la revendication 1, destiné à épurer de l'air de ventilation qui contient à la fois des solvants à haut point d'ébullition et des solvants à bas point d'ébullition, **caractérisé en ce qu'**on fait tout d'abord passer l'air au travers d'au moins un premier lit qui contient un adsorbant sous la forme d'un polymère particulaire, macroporeux sélectionné pour adsorber efficacement les solvants à haut point d'ébullition, puis on fait passer l'air au travers d'au moins un second lit qui contient un adsorbant sous la forme d'un charbon actif pour adsorber le solvant à bas point d'ébullition restant dans l'air de ventilation.

3. Procédé selon la revendication 1 ou 2, **caractérisé en ce qu'**on alimente un désorbeur respectif ou différentes parties d'un désorbeur commun avec chacun des deux adsorbants séparément pour régénérer lesdits adsorbants, dans lequel on introduit chacun des adsorbants dans au moins un lit fluidisé au travers duquel de l'air chaud est soufflé pour régénérer l'adsorbant en question ; on renvoie les adsorbants régénérés dans leurs lits respectifs dans l'unité adsorbante ; et on alimente une unité de combustion avec l'air contenant le solvant.

4. Procédé selon la revendication 3, **caractérisé en ce qu'**on délivre l'air régénérant l'adsorbant en un volume tel qu'après son passage au travers du ou des lit(s) fluidisé(s) dans le désorbeur, la concentration en solvant de l'air est suffisamment élevée pour que la combustion dudit mélange solvant/air soit autoentretenu.

5. Procédé selon la revendication 1 ou 2, **caractérisé en ce qu'**on alimente chacun des deux adsorbants à régénérer séparément dans un désorbeur respectif, dans lequel chaque désorbeur a la forme d'une colonne de rectification ou d'un canal séparé dans une seule colonne de rectification, dans lequel les adsorbants respectifs sont régénérés par l'air chaud que l'on fait circuler à contre-courant au travers desdits adsorbants respectifs et à partir duquel les solvants sont ensuite condensés et récupérés ; et **en ce qu'**on renvoie les adsorbants régénérés dans leurs lits respectifs dans l'unité adsorbante.

6. Agencement destiné à être utilisé lors de l'épuration d'un air de ventilation qui est contaminé à la fois par des substances organiques à haut point d'ébullition et des substances organiques à bas point d'ébullition, telles que des solvants, dans lequel agencement on fait passer l'air de ventilation au travers de lits fluidisés (2 à 5) qui contiennent un matériau en mesure d'adsorber lesdites substances organiques, puis en mesure de libérer les substances par désorption, **caractérisé en ce que** l'agencement comprend au moins un lit fluidisé (2, 3) qui contient un premier matériau adsorbant particulièrement approprié pour adsorber des substances organiques à haut point d'ébullition, au moins un second lit fluidisé (4, 5) qui contient un second matériau adsorbant présentant des caractéristiques d'adsorption différentes de celles du premier matériau adsorbant et étant particulièrement approprié pour adsorber les substances à bas point d'ébullition ; des moyens (10) pour faire tout d'abord passer l'air de ventilation contaminé au travers du premier lit puis au travers le second des moyens (15, 16, 14, 18 ; 55, 28, 56) pour prélever les premier et second adsorbants séparément des premier (2, 3) et second (4, 5) lits respectifs et régénérer lesdits adsorbants par désorption des substances organiques ; et des moyens (26, 13, 12 ; 34, 27) pour renvoyer les adsorbants régénérés dans leurs lits respectifs.

7. Agencement selon la revendication 6, destiné à épurer un air de ventilation qui contient à la fois des solvants à haut point d'ébullition et des solvants à bas point d'ébullition, **caractérisé en ce que** le premier lit (2, 3) contient un adsorbant sous la forme d'un polymère particulaire macroporeux qui est choisi pour adsorber efficacement un solvant à haut point d'ébullition ; et **en ce que** le second lit fluidisé (4, 5) contient un adsorbant sous la forme d'un charbon actif pour adsorber le solvant à bas point d'ébullition présent dans ledit air.

8. Agencement selon la revendication 6 ou la revendication 7, **caractérisé en ce que** l'agencement contient un désorbeur (17 ; 33) pour chaque adsorbant ou différentes parties d'un désorbeur commun pour chaque adsorbant ; des moyens (15, 16, 14, 18 ; 55, 28, 56) pour introduire l'adsorbant dans au moins un lit fluidisé (19, 29) dans un désorbeur associé (17 ; 33) ; des moyens (24 ; 36) pour faire passer l'air chaud au travers du lit de manière à regénérer l'adsorbant ; des moyens (26, 22, 13 ; 34, 27) pour renvoyer l'adsorbant régénéré dans son lit respectif dans l'unité adsorbante (1) ; et des moyens (24, 36, 57) pour délivrer l'air contenant du solvant dans une unité de combustion (40 à 42).
